# EUROPEAN PATENT SPECIFICATION

(11) **EP 2 206 416 B1**
(45) Date of publication and mention of the grant of the patent: **07.09.2011**
(21) Application number: 07849732.8
(22) Date of filing: 31.10.2007
(51) Int. Cl.: H05B 41/392

(54) **A SYSTEM FOR FEEDING LIGHT SOURCES SUBJECT TO DIMMING AND CORRESPONDING METHOD**
SYSTEM ZUR VERSORGUNG VON LICHTQUELLEN, BEI DENEN GEDIMMT WIRD, UND ENTSPRECHENDES VERFAHREN
SYSTÈME D'ALIMENTATION DE SOURCES LUMINEUSES SOUMISES À UNE GRADATION ET PROCÉDÉ CORRESPONDANT

(43) Date of publication of application: 14.07.2010
(73) Proprietor: Osram Gesellschaft mit beschränkter Haftung, 81543 München (DE); Osram Società Riunite, Osram Edison-Clerici S.p.A., 20144 Milano (IT)
(72) Inventor: PIVA, Raffaele, I-31022 Vedelago (Treviso) (IT)
(86) International application number: PCT/IT2007/000763
(87) International publication number: WO 2009/057169

(56) References cited:
- US-A- 4 492 897
- US-A- 5 162 682
- US-A- 5 604 411

## Description

### Field of the invention

The invention relates to arrangements for feeding light sources with electrical power.

The invention was developed with specific attention paid to its possible use in connection with halogen lamps subject to dimming. However, the field of application of the invention is in no way limited to such a possible application.

### Description of the related art

Electronic dimmers are devices used to regulate the brightness of a light source (e.g. a lamp, such as a halogen lamp or a light emitting diode or LED) by decreasing or increasing the mean power fed to the light source.

Dimmers for halogen lamps are usually designated with the acronym ECG (Electronic Control Gear). ECGs can be divided in two main categories, depending on their mechanism of operation: trailing edge dimmers and leading edge dimmers.

Trailing edge dimmers regulate the power transferred to the lamp by cutting-off the sine-wave mains voltage during the falling part or edge of the waveform. Typically, these circuits use an Insulated Gate Bipolar Transistor (IGBT) in order to break-off the main voltage applied to the ECG.

Leading edge dimmers regulate the power by cutting-off the sine-wave voltage during the rising part or edge of the voltage mains waveform. The current is thus allowed to flow into the electronic transformer feeding the light source thanks e.g. to the ignition of a triac or similar component. The delay in triac ignition, usually obtained by varying the time constant of an RC net, determines the mean power delivered to the lamp.

A main advantage of using leading edge dimmers in comparison to trailing edge dimmers lies in the cost of manufacturing. Electronic components for producing a leading edge dimmer are generally cheaper than the components for manufacturing a trailing edge dimmer. For instance, the power stage (a triac for leading edge dimmers and an IGBT for trailing edge dimmers) and the' related driving circuitry (an RC net and a diac for leading edge dimmers, a driver module or microprocessor for trailing edge dimmers) makes the comparison self-evident.

A problem arising in using dimmers with electronic transformers for e.g. halogen lamps lies in the possible interaction with the input filter stage of the ECG. This is particularly the case when dimmers are used with loads in proximity of the minimum limit allowed for their powering (i.e. when the light source is much dimmed to cause it to generate a very low lighting power). The input filter of the ECG is meant to ensure compliance with electromagnetic compatibility (EMC) requirements and limits set by regulations and norms such as the EN 55015 norm. The capacitors and inductors in such an input filter may resonate with the power stage of the dimmer (both leading edge and trailing edge) during the switching phase of the electronic dimmer. The oscillations of the voltage applied to the ECG generate noise, buzz and, in the worst case, flashing or flickering of the lamp light. This problem is particularly annoying with leading edge dimmers in view of their inner structure and becomes particularly evident when leading edge dimmers are used with low output loads of the ECG.

The applicants have noted that a number of solutions have been proposed so far which attempt at dispensing with the drawbacks outlined in the foregoing. These solutions can be related to two basic approaches.

An approach is based on the concept of properly dimensioning the input filter in order to achieve a good behaviour in EMC tests, while at the same ensuring ECG operation with leading edge dimmers. Such an approach typically involves including in the input filter inductors with high inductance values and capacitors with capacitance values that are as low as possible.

Another approach is to add an RC "snubber" (i.e. a dampening filter) dimensioned to give good results in EMC tests. Such a "snubber" is usually comprised of a capacitor and a resistor that are dimensioned in order to damp the oscillations in the voltage applied to the self-oscillating half-bridge included as a basic element in he ECG. The snubber capacitor has a high value and is selected as a high voltage capacitor (e.g. a capacitor with a capacitance of hundreds of nanoFarads, with a voltage rating of 400V minimum with AC mains voltage of 240Vrms). Similarly, a power resistor is needed in order to be able to manage the current filtered by the snubber.

US-B-7 154 230 discloses a circuit arrangement for dimming at least one lamp including a filter connected to the output of a dimming device. The filter has at least one capacitor and an output for coupling to an electronic ballast. An input impedance modification device is connected to the filter device in order to modify the input impedance active at the input of the filter.

US 4 492 897 discloses a switching circuit which avoids dangerously high voltages when the lamp is removed.

### Object and summary of the invention.

The applicants have observed that the solutions developed so far in order to obtain correct operation of e.g. leading edge dimmers and ECGs suffer from a number of drawbacks. These include i.a. the need for inductors with high values; these inductors are expensive to produce and take much space on the upper side of the circuit board (Printed Circuit Board or PCB) onto which they are mounted. This also applies to high-value and high-voltage capacitors or power resistors in those arrangements using conventional RC snubbers.

The applicant has noted that the use of a cheap leading edge dimmer may collide with the higher costs involved in providing an input filter that does not resonate with the dimmer. These costs are primarily related to the magnetic component of the input filter bobbin. The costs of magnetic components (ferrites, powder corers, copper, and so on) have steadily increased over the years with negative effects on the overall costs of electronic transformers.

Also, input impedance modification devices as disclosed in US-B-7 154 230 are rather complex and, in any case, are sensitive only to the input or supply voltage fed into the arrangement.

In view of the foregoing, the need is felt for improved arrangements which may permit i.a. to effectively use leading edge dimmers with electronic transformers without compromising the EMC performance of the ECG input filter while at the same time not requiring components that may be expensive and take undue space on the PCB onto which they are mounted. The object of the present invention is to provide an arrangement satisfying such a need.

According to the present invention, that object is achieved by means of a system having the features set forth in the claims that follow. The invention also relates to a corresponding system. The claims are an integral part of the disclosure of the invention provided herein.

A basic idea underlying an embodiment of the invention is to change dynamically the input filter electrical behaviour in relationship (e.g. as a function) of the output load of the ECG. An embodiment of the invention permits using a leading edge dimmer efficiently with electronic transformers by optimizing the costs for the input filter which is made cheaper and more compact. In an embodiment, the input filter can be designed to fulfil EMC requirements by using capacitors with higher values while also reducing the inductance value (and thus the cost) of the bobbin. A lower cost for the inductance goes in parallel with an advantage in terms of space, since the inductance can be made more compact as a component. An embodiment of the invention includes a bidirectional switch and control circuitry that drives it in order to enable/disable a resistance connected in series with a capacitor in the input filter. Various options are available for manufacturing such a control circuit in order to produce a signal to operate the switch (on/off) as a function of the output load conditions. The switch is thus controlled as a function of a signal related to the output load which may be obtained by sensing any parameter (e.g. a current and/or a voltage) that depends on the load.

### Brief description of the annexed drawings

The invention will now be described, by way of example only, with reference to the annexed figures of drawing wherein:
- Figure 1 is a schematic representation of a circuit arrangement for dimming a light source,
- Figure 2 is a more detailed representation of a possible embodiment of the arrangement shown in Figure 1; and
- Figure 3 is a representation of a simplified version of the arrangement illustrated in Figure 2.

### Detailed description of embodiments

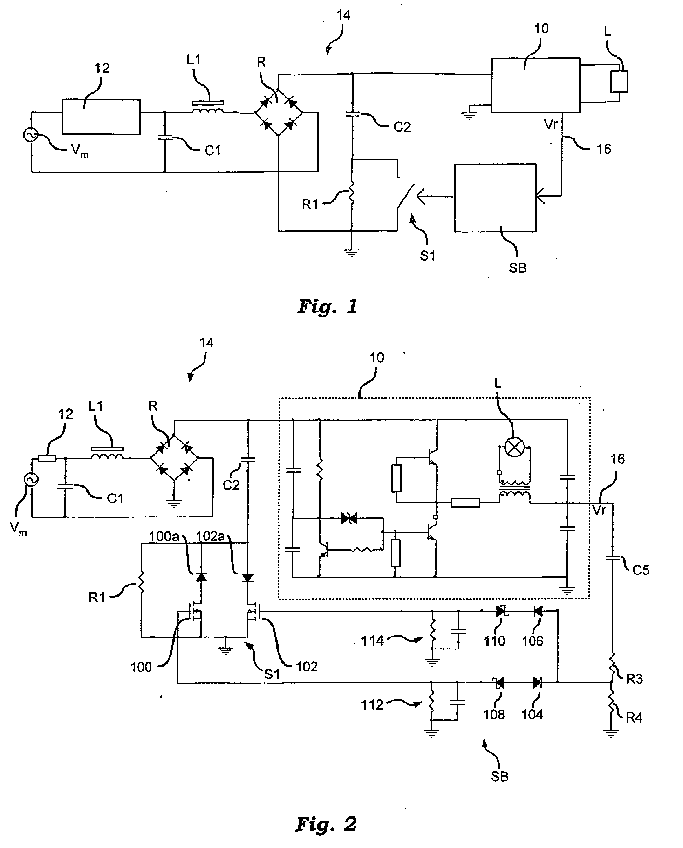

Figure 1 is a schematic representation of an arrangement for feeding a light source such as halogen lamp L starting from a mains voltage Vₘ such as e.g. a 240 Vrms mains voltage.

In the exemplary embodiment shown, the light source L is fed via a self-oscillating half bridge 10 which constitutes the core of the ECG (Electronic Control Gear) used for powering (i.e. feeding with electrical power) the light source L.

The power fed to the light source L (and consequently, the brightness of the light source L) is selectively controlled via a dimmer 12. In an embodiment, the dimmer 12 is of leading edge type as discussed in the introductory portion of this description.

The output of the dimmer 12 is connected to the input of the self-oscillating half bridge arrangement 10 via an input filter 14. In the exemplary embodiment illustrated, the input filter is a so-called "π" (Greek-pi) filter configuration including a first capacitor C1 and a second capacitor C2 that comprise the "legs" of the pi configuration. An inductor Ll, together with a full-wave rectifier R comprise the top portion of the pi configuration.

The configuration just described is conventional in the art and (save for what is subsequently described in detail in the following) does not require to be further detailed in this context.

This also applies to the internal structure of the self-oscillating half-bridge arrangement 10 feeding the light source L.

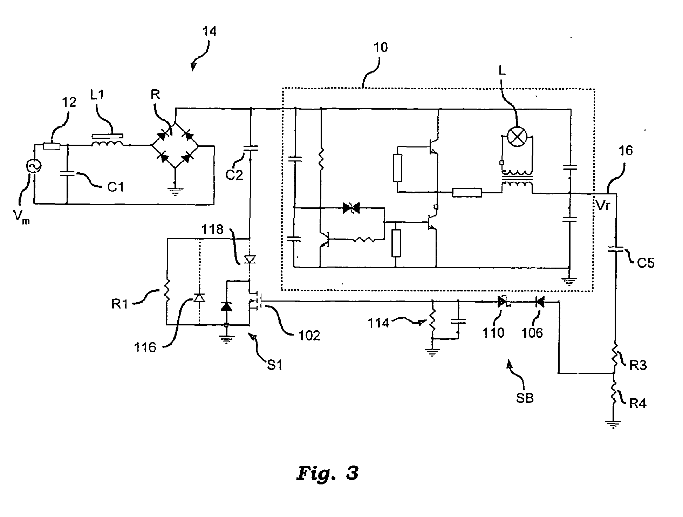

While the diagrams of figures 2 and 3 illustrate an exemplary arrangements of components of such a half-bridge 10, the configurations shown are in no way mandatory. Any other configuration for a bridge arrangement can be used within the framework of the exemplary embodiment shown herein.

The exemplary self-oscillating half-bridge 10 is shown to include an output port or connection point from which a (voltage and/or current) signal Vr can be derived over a line 16, The signal Vr is representative of the load at the output of the half-bridge 10 (this is essentially the load provided by the light source L).

The signal Vr will make it possible to distinguish "nominal" load situations from "low" load conditions. As better detailed in the following, the value(s) of the threshold(s) identifying a "low-load" condition will be dictated by the specific operating conditions of the arrangement.

In the exemplary embodiment illustrated herein, connected in series with the capacitor C2 is a resistor R1 having associated therewith a bidirectional switch S1. The switch S1 is in turn controlled by control circuitry (signal block) SB fed with the load-sensitive signal Vr present on the line 16.

The basic principle of operation of the arrangement illustrated herein is as follows.

With a nominal output load ("high load"), the bidirectional switch S1 is on (i.e. closed) so that the resistor R1 is short-circuited. The input filter 14 is thus configured according to the standard Greek-pi configuration.

Conversely, when the signal Vr on the line 16 denotes a low output load ("low load"), the switch S1 is off (namely open) so that the resistance R1 is connected in series with the capacitor C2 to provide "snubber" operation.

The input filter 14 (that is the capacitors C1, C2 and the inductor L1) is dimensioned in such a way to comply with EMC norms such as EN 55015 for those ECGs intended for low-voltage halogen lamps. Consequently, with the switch S1 switched on to short the resistor R1, the input filter provides maximum EMC filtering performance.

In the presence of low load conditions, the noise generated by the ECG decreases. At the same time, the low load condition turns out to be the worst case condition for correct operation of a dimmer with an ECG.

The exemplary arrangement disclosed herein is based on the recognition that, at low output load, the noise generated by the ECG decreases, so that the input filter ends up by being over-dimensioned. The lower EMC noise generated in low-output load conditions permits to switch off the switch S1 thus coupling (i.e. connecting in series) the resistor R1 with the capacitor C2. While such a step reduces the input filter performance in terms of EMC noise filtering, the RC snubber thus created is advantageous in ensuring correct functioning of the dimmer with the ECG. Also, the snubber circuit thus created includes the capacitor C2 of the input filter, whereby the overall circuit complexity is not increased.

In the exemplary embodiment shown, the signal used for driving the switch S1 is directly proportional to the output load of the ECG as sensed over the line 16.

At full load, the output of the signal block SB is e.g. high, thus closing the switch S1 to short-circuit the resistor R1. When the load decreases to values that are critical for the dimmer, the output of the signal block SB is low so that the switch S1 is opened and resistor R1 is coupled with the capacitor R2.

Those of skill in the art will promptly appreciate that such as an exemplary arrangement is not mandatory, in that other circuit arrangements may be devised to ensure that the resistor R1 is coupled to the capacitor C2 (only) under low load conditions to provide snubber action.

In an embodiment, the switch S1 is implemented as an electronic switch. The switch S1 thus blocks the current filtered by the capacitor C2 when "off" (i.e. "open"), while carrying (i.e. conducting) the current filtered by C2 when "on" (i.e. "closed"). In an embodiment, the switch S1 is a bidirectional switch able to withstand the current filtered by C2. In an embodiment, the resistor R1 is dimensioned so that when S1 is off, it can properly manage the current flowing through the capacitor C2 in order to obtain a damping factor that cancels the oscillations of the voltage applied to the capacitor C2.

In an embodiment, a value for the resistance of the resistor R1 is in the range of ............ with a capacitance value of the capacitor C2 in the range of .......................

In the exemplary embodiment shown in figure 2, the switch S1 is implemented by using a P-channel Mosfet 100 and an N-channel Mosfet 102 connected in parallel, each transistor 100, 102 having a diode 100a, 102a in series to ensure that current will not flow through the body diodes of the associated transistors 100, 102 when these are off.

The Mosfets 100, 102 and the diodes 100a, 102a are selected in such a way to be able to sustain the current filtered by the capacitor C2, when "on", and to withstand the voltage across the resistor R1 when "off".

In the exemplary embodiment shown, the load-sensitive signal Vr on the line 16 is passed through a capacitor C5 to filter ripple possibly present thereon and then fed to a voltage divider comprised of two resistors R3 and R4.

The voltage divider R3, R4 produces a voltage signal proportional to the load on the ECG essentially as represented by the alternating part of the voltage between the decoupling capacitors at the output of the ECG (see the starting point of the line 16 in both figures 2 and 3). The peak value of the voltage between these two decoupling capacitors is in fact directly related to the output load.

In the exemplary embodiment shown, the circuit SB includes two peak-detectors each including a diode 104, 106 in series with a zener diode 108, 110 and a RC integrating network 112, 114.

Out of the two peak-detectors thus formed, the peak detector 104, 108, and 112 that drives the P-Mosfet 100 gives a negative output when the input signal is adequately low. Conversely the peak-detector 106, 110, and 114 that drives the N-Mosfet 102 gives a positive output when the input signal is adequately high.

Since the input signal is essentially a sinusoidal voltage, the P-Mosfet 100 and the N-Mosfet 102 are switched on at the same time.

In the exemplary arrangement illustrated, the voltage level that switches the Mosfets 100 and 102 can be defined (depending on the intended application) by selecting the values for the resistors R3 and R4 in the voltage divider in conjunction with the zener voltages of the diodes 108 and 110.

In an embodiment, the threshold level in question is selected so that during operation with low output load, the two Mosfets 100 and 102 are off, so that the input filter 14 including the resistor R1 provides an adequate damping action to cancel out the oscillations in the ECG which might result in flickering of the light source.

The diagram of figure 3 (it will be appreciated that identical or equivalent elements have been referenced with the same symbols and numbers throughout figures 1 to 3) is representative of a simplified embodiment of the arrangement herein where a number of components shown in figure 2 are dispensed with.

In the exemplary simplified embodiment of figure 3, the P-Mosfet and the associated negative peak-detector are dispensed with. The bidirectional switch S1 is comprised essentially of the N-Mosfet 102 alone. Under these conditions, the bidirectional switch S1 is no longer an ideal bidirectional switch but rather a switch where the role of the P-Mosfet 100 in figure 2 is played in the arrangement of figure 3 by the body diode of the N-Mosfet 102.

The current I_{c} filtered by the capacitor C2 has a positive component which is appreciably higher that the negative component. Consequently, fully satisfactory operation of the arrangement described herein is ensured even by damping only the positive component of the current I_{c} in order to cancel oscillations of the input filter 14 during the dimming operation.

When the N-Mosfet 102 is off, the negative part of the current flows through the body diode of the Mosfet 102 and not through the resistor R1. This current, even though not damped, is unable to induce undesired oscillations in the input filter.

In figure 3, reference numerals 106 and 118 indicate two possible advantageous additions (shown in dashed lines) to the layout shown therein.

Specifically, reference 116 denotes a diode which may be added in parallel with the N-Mosfet 102 so that the negative component of the current I_{c} filtered by the capacitor C2 will flow through the diode 118 only if its direct diode voltage is lower than the direct diode voltage of the body diode of the Mosfet 102.

Reference 118 denotes another diode which may be added in series with the Mosfet 102. The purpose of the diode 118 is to prevent the negative component of the current I_{c} to flow through the body diode of the Mosfet 102.

The exemplary embodiments illustrated herein provide for the switch S1 being switched at a single given signal level indicative of the load reaching a given threshold level when entering or exiting "low load" conditions.

To advantage, a hysteresis behaviour can be bestowed on the switch S1 by ensuring that the load level causing the turn-off of S1 is lower than the load level causing the switch S1 to be turned on. Such an arrangement is advantageous in that it dispenses with any undesired quasi-stable bifurcations in operation of the device.

Still another embodiment may provide a linear control of the switch S1 between a first lower load level and a second, higher load level. Below the lower load level, the switch S1 will be turned off completely to ensure full snubber operation. Above the upper loead level, the switch S1 will be turned on completely to ensure full EMC noise filtering. Between the lower and upper load levels, the switch S1 will be operated more or less like a controllable resistor in parallel to the resistor R1 depending on the load level (this may be achieved e.g. by actuating the switch S1 in a "chopper" mode with a duty cycle variable gradually from fully open to fully closed). In the presence of a gradually decreasing load, the possibility will thus exist for the resistor R1 to be gradually connected to the capacitor C2 thus providing a gradual activation of the snubber arrangement while gradually relaxing the EMC noise filtering action of the input filter and gradually increasing the action countering possible undesired oscillations in the ECG arrangement.

Both hysteresis-like and linear operation as just described can be easily implemented by the person skilled in the art starting from the exemplary "onoff", single threshold arrangement previously described.

Consequently, without prejudice to the underlying principles of the invention, the details and embodiments may vary, even significantly, with respect to what has been described and/or illustrated herein purely by way of example, without departing from the scope of the invention as defined by the annexed claims.

## Claims

1. A system for feeding electrical power to a light source (L) via a bridge arrangement (10), said system having an input filter (14) for connection to a dimmer (12), said input filter (14) has a Greek-pi configuration, including an output capacitor (C2), the system including a switch (S1) sensitive (16, SB) to the load on said bridge arrangement (10), **characterized in that** the system includes a resistor (R1) selectively coupleable to said output capacitor (C2) via said switch, whereby said resistor (R1) is coupleable to said input filter (14) to form a snubber circuit to prevent oscillations of said input filter (14) and said bridge arrangement (10) by selectively coupling said resistor (R1) to said output capacitor (C2) when the load on said bridge arrangement (10) is below a given threshold.

2. The system of claim 1, including said switch (S1) configured to disconnect said resistor (R1) from said input circuit filter (14) when said load on said bridge arrangement (10) is above a respective threshold.

3. The system of claim 2, including said switch (S1) configured to couple and disconnect said resistor (R1) to and from said input filter (14) when the load on said bridge arrangement (10) is below and above, respectively, said given threshold.

4. The system of claim 2, including said switch (S1) configured to couple said resistor (R1) to said input filter (14) when the load on said bridge arrangement (10) is below a first threshold and to disconnect said resistor (R1) from said input filter (14) when the load on said bridge arrangement (10) is above a second threshold higher than said first threshold.

5. The system of claim 4, including said switch (S1) configured to partially couple said resistor (R1) to said input filter (14) when the load on said bridge arrangement (10) lies between said first and second threshold.

6. The system of any of the previous claims, including said switch (S1) to connect said resistor (R1) in series to said output capacitor (C2).

7. The system of any of the previous claims, wherein said switch (S1) is an electronic switch.

8. The system of claim 7, wherein said switch (S1) is a bipolar switch.

9. The system of claim 8, wherein said switch (81) includes two opposite-polarity transistors (100, 102).

10. The system of claim 8, wherein said switch (S1) includes a single transistor (102) including a body diode, wherein the bipolar nature of said switch is provided by said transistor (102) and the body diode thereof.

11. The system of any of the previous claims, including control circuitry (SB) for said switch (S1), said control circuitry with at least one threshold detector (104, 108, 112; 106, 110, 114) sensitive to a signal (16) representative of the load on said bridge arrangement (10).

12. The system of claim 11, wherein said at least one threshold detector (104, 108, 112; 106, 110, 114) includes a zener diode (108, 110) wherein the zener voltage of said zener diode (108, 110) defines a switching point for said switch (S1).

13. The system of any of the previous claims, including control circuitry (SB) for said switch (S1), said control circuitry (SB) coupled to a voltage divider (R3, R4) sensitive to the load on said bridge arrangement (10), wherein the partition point of said voltage divider (R3, R4) defines a switching point for said switch (S1).

14. The system of any of the previous claims, wherein said dimmer is a leading edge dimmer (12).

15. A method of feeding electrical power to a light source (L) via a bridge arrangement (10) and via an input filter (14) for connection to a dimmer (12), said input filter (14) has a Greek-pi configuration, including an output capacitor (C2), the method including the steps of sensing the load on said bridge arrangement (10), **characterized in that** a resistor (R1) is provided coupleable to said output capacitor (C2) via said switch, to form a snubber circuit to prevent oscillations of said input filter (14) and said bridge arrangement (10) by selectively (S1) coupling said resistor (R1) to said output capacitor (C2) when the load of said bridge arrangement (10) is below a given threshold.

16. The method of claim 15, including the step of disconnecting said resistor (R1) from said input circuit filter (14) when said load on said bridge arrangement (10) is above a respective threshold.

17. The method of claim 16, including the steps of coupling and disconnecting said resistor (R1) to and from said input filter (14) when the load on said bridge arrangement (10) is below and above, respectively, said given threshold.

18. The method of claim 16, including the steps of coupling said resistor (R1) to said input filter (14) when the load on said bridge arrangement (10) is below a first threshold and disconnecting said resistor (R1) from said input filter (14) when the load on said bridge arrangement (10) is above a second threshold higher than said first threshold.

19. The method of claim 18, including the step of partially coupling said resistor (R1) to said input filter (14) when the load on said bridge arrangement (10) lies between said first and second threshold.

## Patentansprüche

1. System zur Versorgung einer Lichtquelle (L) mit elektrischer Energie über eine Brückenanordnung (10), wobei das besagte System ein Eingangsfilter (14) zur Verbindung mit einem Dimmer (12) aufweist, wobei das besagte Eingangsfilter (14) eine Pi-Filter-Konfiguration aufweist, die einen Ausgangskondensator (C2) enthält, wobei das System einen Schalter (S1) enthält, der empfindlich (16, SB) gegenüber der Last an der besagten Brückenanordnung (10) ist, **dadurch gekennzeichnet, dass** das System einen Widerstand (R1) aufweist, der über den besagten Schalter selektiv mit dem besagten Ausgangskondensator (C2) koppelbar ist, wodurch der besagte Widerstand (R1) mit dem besagten Eingangsfilter (14) koppelbar ist, um eine Begrenzerschaltung (Snubber Circuit) zu bilden, um Schwingungen des besagten Eingangsfilters (14) und der besagten Brückenanordnung (10) zu verhindern, indem der besagte Widerstand (R1) selektiv mit dem besagten Ausgangskondensator (C2) gekoppelt wird, wenn die Last an der besagten Brückenanordnung (10) unter einem gegebenen Schwellwert liegt.

2. System nach Anspruch 1, wobei der besagte Schalter (S1) dafür ausgelegt ist, den besagten Widerstand (R1) von dem besagten Eingangsschaltungsfilter (14) zu trennen, wenn die besagte Last an der besagten Brückenanordnung (10) über einem jeweiligen Schwellwert liegt.

3. System nach Anspruch 2, wobei der besagte Schalter (S1) dafür ausgelegt ist, den besagten Widerstand (R1) mit dem besagten Eingangsfilter (14) zu koppeln und von ihm zu trennen, wenn die Last an der besagten Brückenanordnung (10) unter bzw. über dem besagten gegebenen Schwellwert liegt.

4. System nach Anspruch 2, wobei der besagte Schalter (S1) dafür ausgelegt ist, den besagten Widerstand (R1) mit dem besagten Eingangsfilter (14) zu koppeln, wenn die Last an der besagten Brückenanordnung (10) unter einem ersten Schwellwert liegt, und den besagten Widerstand (R1) von dem besagten Eingangsfilter (14) zu trennen, wenn die Last an der besagten Brückenanordnung (10) über einem zweiten Schwellwert liegt, der höher als der besagte erste Schwellwert ist.

5. System nach Anspruch 4, wobei der besagte Schalter (S1) dafür ausgelegt ist, den besagten Widerstand (R1) teilweise mit dem besagten Eingangsfilter (14) zu koppeln, wenn die Last an der besagten Brückenanordnung (10) zwischen dem besagten ersten und zweiten Schwellwert liegt.

6. System nach einem der vorhergehenden Ansprüche, wobei der besagte Schalter (S1) den besagten Widerstand (R1) mit dem besagten Ausgangskondensator (C2) in Reihe schaltet.

7. System nach einem der vorhergehenden Ansprüche, wobei der besagte Schalter (S1) ein elektronischer Schalter ist.

8. System nach Anspruch 7, wobei der besagte Schalter (S1) ein bipolarer Schalter ist.

9. System nach Anspruch 8, wobei der besagte Schalter (S1) zwei Transistoren mit entgegengesetzter Polarität (100, 102) aufweist.

10. System nach Anspruch 8, wobei der besagte Schalter (S1) einen einzigen Transistor (102) aufweist, der eine Body-Diode enthält, wobei die bipolare Natur des besagten Schalters durch den besagten Transistor (102) und die Body-Diode desselben gewährleistet wird.

11. System nach einem der vorhergehenden Ansprüche, das eine Steuerschaltungsanordnung (SB) für den besagten Schalter (S1) aufweist, wobei die besagte Steuerschaltungsanordnung mit mindestens einem Schwellwertdetektor (104, 108, 112; 106, 110, 114) empfindlich gegenüber einem Signal (16) ist, das für die Last an der besagten Brückenanordnung (10) repräsentativ ist.

12. System nach Anspruch 11, wobei der besagte mindestens eine Schwellwertdetektor (104, 108, 112; 106, 110, 114) eine Zenerdiode (108, 110) aufweist, wobei die Zenerspannung der besagten Zenerdiode (108, 110) einen Schaltpunkt für den besagten Schalter (S1) definiert.

13. System nach einem der vorhergehenden Ansprüche, das eine Steuerschaltungsanordnung (SB) für den besagten Schalter (S1) aufweist, wobei die besagte Steuerschaltungsanordnung (SB) mit einem Spannungsteiler (R3, R4) gekoppelt ist, der empfindlich gegenüber der Last an der besagten Brückenanordnung (10) ist, wobei der Aufteilungspunkt des besagten Spannungsteilers (R3, R4) einen Schaltpunkt für den besagten Schalter (S1) definiert.

14. System nach einem der vorhergehenden Ansprüche, wobei der besagte Dimmer ein Vorderflankendimmer (12) ist.

15. Verfahren zur Versorgung einer Lichtquelle (L) mit elektrischer Energie über eine Brückenanordnung (10) und über ein Eingangsfilter (14) zur Verbindung mit einem Dimmer (12), wobei das besagte Eingangsfilter (14) eine Pi-Filter-Konfiguration aufweist, die einen Ausgangskondensator (C2) enthält, wobei das Verfahren die Schritte des Erfassens der Last an der besagten Brückenanordnung (10) aufweist, **dadurch gekennzeichnet, dass** ein Widerstand (R1) vorgesehen ist, der mit dem besagten Ausgangskondensator (C2) über den besagten Schalter koppelbar ist, um eine Begrenzerschaltung (Snubber Circuit) zu bilden, um Schwingungen des besagten Eingangsfilters (14) und der besagten Brückenanordnung (10) zu verhindern, indem der besagte Widerstand (R1) selektiv (S1) mit dem besagten Ausgangskondensator (C2) gekoppelt wird, wenn die Last an der besagten Brückenanordnung (10) unter einem gegebenen Schwellwert liegt.

16. Verfahren nach Anspruch 15, welches den Schritt des Trennens des besagten Widerstands (R1) von dem besagten Eingangsschaltungsfilter (14) aufweist, wenn die besagte Last an der besagten Brückenanordnung (10) über einem jeweiligen Schwellwert liegt.

17. Verfahren nach Anspruch 16, welches die Schritte des Koppelns und Trennens des besagten Widerstands (R1) mit dem besagten Eingangsfilter (14) und von diesem aufweist, wenn die Last an der besagten Brückenanordnung (10) unter bzw. über dem besagten gegebenen Schwellwert liegt.

18. Verfahren nach Anspruch 16, welches die Schritte des Koppelns des besagten Widerstands (R1) mit dem besagten Eingangsfilter (14), wenn die Last an der besagten Brückenanordnung (10) unter einem ersten Schwellwert liegt, und des Trennens des besagten Widerstands (R1) von dem besagten Eingangsfilter (14), wenn die Last an der besagten Brückenanordnung (10) über einem zweiten Schwellwert liegt, der höher als der besagte erste Schwellwert ist, aufweist.

19. Verfahren nach Anspruch 18, welches den Schritt des teilweisen Koppelns des besagten Widerstands (R1) mit dem besagten Eingangsfilter (14) aufweist, wenn die Last an der besagten Brückenanordnung (10) zwischen dem besagten ersten und zweiten Schwellwert liegt.

## Revendications

1. Système d'alimentation en énergie électrique d'une source lumineuse (L) par l'intermédiaire d'un agencement en pont (10), ledit système ayant un filtre d'entrée (14) pour connexion à un variateur (12), ledit filtre d'entrée (14) a une configuration en pi grec, incluant un condensateur de sortie (C2), le système incluant un commutateur (S1) sensible (16, SB) à la charge sur ledit agencement en pont (10), **caractérisé en ce que** le système inclut une résistance (R1) pouvant être sélectivement couplée audit condensateur de sortie (C2) par l'intermédiaire dudit commutateur, d'où il résulte que ladite résistance (R1) peut être couplée audit filtre d'entrée (14) pour former un circuit de protection pour empêcher des oscillations dudit filtre d'entrée (14) et dudit agencement en pont (10) par couplage sélectif de ladite résistance (R1) audit condensateur de sortie (C2) lorsque la charge sur ledit agencement en pont (10) est en-dessous d'un seuil donné.

2. Système selon la revendication 1, incluant ledit commutateur (S1) configuré pour déconnecter ladite résistance (R1) dudit filtre de circuit d'entrée (14) lorsque la charge sur ledit agencement en pont (10) est au-dessus d'un seuil respectif.

3. Système selon la revendication 2, incluant ledit commutateur (S1) configuré pour coupler et déconnecter ladite résistance (R1) audit et dudit filtre d'entrée (14) lorsque la charge sur ledit agencement en pont (10) est en-dessous et au-dessus, respectivement, dudit seuil donné.

4. Système selon la revendication 2, incluant ledit commutateur (S1) configuré pour coupler ladite résistance (R1) audit filtre d'entrée (14) lorsque la charge sur ledit agencement en pont (10) est en-dessous d'un premier seuil et pour déconnecter ladite résistance (R1) dudit filtre d'entrée (14) lorsque la charge sur ledit agencement en pont (10) est au-dessus d'un deuxième seuil supérieur audit premier seuil.

5. Système selon la revendication 4, incluant ledit commutateur (S1) configuré pour coupler partiellement ladite résistance (R1) audit filtre d'entrée (14) lorsque la charge sur ledit agencement en pont (10) se trouve entre lesdits premier et deuxième seuils.

6. Système selon l'une quelconque des revendications précédentes, incluant ledit commutateur (S1) pour connecter ladite résistance (R1) en série audit condensateur de sortie (C2).

7. Système selon l'une quelconque des revendications précédentes, dans lequel ledit commutateur (S1) est un commutateur électronique.

8. Système selon la revendication 7, dans lequel ledit commutateur (S1) est un commutateur bipolaire.

9. Système selon la revendication 8, dans lequel ledit commutateur (S1) inclut deux transistors (100, 102) de polarités opposées.

10. Système selon la revendication 8, dans lequel ledit commutateur (S1) inclut un transistor (102) unique incluant une diode de corps, dans lequel la nature bipolaire dudit commutateur est fournie par ledit transistor (102) et la diode de corps de celui-ci.

11. Système selon l'une quelconque des revendications précédentes, incluant un circuit de commande (SB) pour ledit commutateur (S1), ledit circuit de commande avec au moins un détecteur de seuil (104, 108, 112 ; 106, 110, 114) sensible à un signal (16) représentatif de la charge sur ledit agencement en pont (10).

12. Système selon la revendication 11, dans lequel ledit au moins un détecteur de seuil (104, 108, 112 ; 106, 110, 114) inclut une diode de Zener (108, 110), dans lequel la tension de Zener de ladite diode de Zener (108, 110) définit un point de commutation pour ledit commutateur (S1).

13. Système selon l'une quelconque des revendications précédentes, incluant un circuit de commande (SB) pour ledit commutateur (S1), ledit circuit de commande (SB) couplé à un diviseur de tension (R3, R4) sensible à la charge sur ledit agencement en pont (10), dans lequel le point de partage dudit diviseur de tension (R3, R4) définit un point de commutation pour ledit commutateur (S1).

14. Système selon l'une quelconque des revendications précédentes, dans lequel ledit variateur est un variateur de front d' onde (12).

15. Procédé d'alimentation en énergie électrique d'une source lumineuse (L) par l'intermédiaire d'un agencement en pont (10) et par l'intermédiaire d'un filtre d'entrée (14) pour connexion à un variateur (12), ledit filtre d'entrée (14) a une configuration en pi grec, incluant un condensateur de sortie (C2), le procédé incluant les étapes de détection de la charge sur ledit agencement en pont (10), **caractérisé en ce qu'**une résistance (R1) est prévue de manière à pouvoir être couplée audit condensateur de sortie (C2) par l'intermédiaire dudit commutateur, pour former un circuit de protection pour empêcher des oscillations dudit filtre d'entrée (14) et dudit agencement en pont (10) par couplage sélectif (S1) de ladite résistance (R1) audit condensateur de sortie (C2) lorsque la charge dudit agencement en pont (10) est en-dessous d'un seuil donné.

16. Procédé selon la revendication 15, incluant l'étape de déconnexion de ladite résistance (R1) dudit filtre d'entrée (14) lorsque ladite charge sur ledit agencement en pont (10) est au-dessus d'un seuil respectif.

17. Procédé selon la revendication 16, incluant les étapes de couplage et de déconnexion de ladite résistance (R1) audit et dudit filtre d'entrée (14) lorsque la charge sur ledit agencement en pont (10) est en-dessous et au-dessus, respectivement, dudit seuil donné.

18. Procédé selon la revendication 16, incluant les étapes de couplage de ladite résistance (R1) audit filtre d'entrée (14) lorsque la charge sur ledit agencement en pont (10) est en-dessous d'un premier seuil et de déconnexion de ladite résistance (R1) dudit filtre d'entrée (14) lorsque la charge sur ledit agencement en pont (10) est au-dessus d'un deuxième seuil supérieur audit premier seuil.

19. Procédé selon la revendication 18, incluant l'étape de couplage partiel de ladite résistance (R1) audit filtre d'entrée (14) lorsque la charge sur ledit agencement en pont (10) se trouve entre lesdits premier et deuxième seuils.
